# EUROPEAN PATENT APPLICATION

(11) **EP 2 244 033 A1**
(43) Date of publication of application: **27.10.2010**
(21) Application number: 09425156.8
(22) Date of filing: 24.04.2009
(51) Int. Cl.: F24J 2/14, G02B 5/08, G02B 5/10, G02B 7/183

(54) **Reflecting panel with dielectric reflective coating and method for the manufacturing thereof**

(71) Applicant: RONDA S.P.A., 36010 Zanè (VI) (IT)
(72) Inventor: Guzman, Luis, 36010 Zané (Vecenza) (IT); Ronda, Giovanni, 36010 Zané (Vicenza) (IT)
(74) Representative: Locas, Davide

(57) **Abstract**

A reflecting panel (100), that can be big sized and have high reflectivity, even without requiring particularly expensive materials and manufacturing techniques, comprises a composite polymeric material substrate (1) and a dielectric reflective coating (20) deposited by an ALD (Atomic Layer Deposition) technique at least on a development surface of said substrate (1).

## Description

The present invention relates to a reflecting panel comprising a dielectric reflective coating and to the method for the manufacturing thereof, as well as to a reflecting element, e.g. for architectural uses or for exploiting the concentrating solar power.

Several technological fields requires the use of mirrors or, in general, reflecting panels, having notable size, e.g. with sides in the range of 1 - 2 meters. Examples of these fields are represented by architectural uses, wherein mirrors are used for decorative purposes, or, above all, in the field of solar power exploiting. Moreover, in said field reflecting panels requires particular shapes, generally non planar, or they are installed so as to define a reflecting element having a particular geometry.

More precisely, the use of big sized mirrors is widely required for uses in concentrating solar power plants. Such plants exploit solar power for providing electric power from the heat of Sun, advantageously allowing to produce medium and high temperature heat. A possible exemplificative embodiment of such plants could consist of a set of parabolic mirrors concentrating direct sunlight to a receiving tube, inside which a thermal vector fluid flows, absorbing energy and conveying it so as to provide a vapour generation through heat exchangers and thus operate one or more turbines. Accordingly, it is evident that the more the thermal solar power is concentrated towards the tube or towards other systems used in different concentrating plants embodiments, the more the amount of energy to be provided to turbines is. Then, in order to increase the amount of concentrated thermal power, the manufacturing of the greatest reflecting surfaces possible, having at the same time the greatest reflectivity possible is always under research.

Hence, in order to obtain wide surfaces a plurality of mirrors are used, the one next to the other, so as to provide a single parabolic reflecting structure. Normally, such mirrors are made of glass and, accordingly, it is difficult to manufacture a wide reflecting parabolic surface.

In particular, remarkable difficulties exist in the manufacturing of mirrors having high deflection, as well as in the relative transport and installation steps. Modem mirrors manufacturing technologies allow to manufacture surfaces which are not excessively fragile, so as not to make transport and installation too difficult. Nevertheless, such solutions are quite expensive and, a cheaper alternative is represented by the use of several mirrors having smaller sizes - and thus smaller deflection - and putting them side by side so as to provide the parabolic shape.

Nevertheless, it can be immediately understood how reflecting surfaces realized in this manner, could not guarantee high efficiency in reflecting solar power and, also in this case, mirrors breakings could occur quite often, thus requiring a significant maintenance in general.

In fact, it should be noted that reflecting elements often requires constant maintenance since they are meant to be exposed to the external environment, often desert or other impervious environments, in which breakings or damages easily occur to a glass mirrors.

In order to simplify the manufacturing of wide parabolic reflecting surfaces and, thus, improve the efficiency of sunlight reflection and make the plant manufacturing easier, solutions have been developed which are alternative to a merely use of mirrors. E.g., JP 59072401 A2, to Nippon Sheet Glass Co Ltd, describes a method per a cheap manufacturing of a curved sunlight reflecting panel. Such method envisages the use of a sufficiently thin glass substrate and of a silver sheet which are initially joined together by an adhesive and then they are deformed together for obtaining the desired deflection.

Nevertheless, such method provides anyhow for the use of thin glass sheets and, in general, of traditional materials, thus maintaining problems connected to the above described breaking and damaging possibilities. Furthermore, in this case, even using traditional materials in the manufacturing of mirrors, a perfect reflectivity is not achieved, since silver reaches values of about 95%, while values more proximate to 100% would be desirable, said values corresponding to a complete exploitation of sun radiation.

Alternatively, solar panels exist which are made of more advanced materials, generally based on the deposition of metals on various substrates. An example of such panels is described in US patent US 5,912,777, to US National Aeronautics and Space Administration.

Panels described in such patent comprises a substrate made of nickel or nickel alloys, onto which, after being accurately polished, a thin silver layer (from 300 Ǻ to 3000 Ǻ) is deposited by sputtering.

Nevertheless, such panels, although showing good reflectivity features have significant drawbacks connected to the use of sputtering processes. Firstly, such technique requires the use of suitable high vacuum processing chambers and it is therefore evident that this feature makes the technology hardly exploitable industrially, in particular in the case it is desired to make notably sized mirrors. In addition, the silver layer requires a further protective layer in order to avoid the oxidation thereof, which will not be perfectly homogeneous if it is not manufactured by sputtering as microporosity is normally present. Such defects makes the protection flawed and the underlying silver layer will be anyhow etched by atmospheric agents, thus remarkably limiting panel lifetime.

Further alternatively, in the international patent application WO05121389A1, by ENEA - Ente per le Nuove Tecnologie, l'Energia e l'Ambiente, panels made of ceramic material are described, onto which a layer in a reflecting material is deposited. Nevertheless, in this case, the resulting panel is easily subjected to breaking and its transfer and installation are excessively complex.

Furthermore, all panels in the art are normally mounted on supporting structures during the use thereof. Mounting such panels is therefore particularly hard owing to the evident difficulties connected to the handling of such big sized parabolic panels and, in addition, the installation thereof also involves some strain problems connected to the different thermal expansion between panel and the supporting structure, as they are made in different materials, since it is not obviously possible to manufacture a supporting structure made of glass, ceramics, or of the particular metals used in the other previously described technologies.

Hence, the technical problem underlying the present invention is to provide a big sized reflecting panel, which can be easily shaped so as to have a substantial parabolic deflection, allowing to overcome the drawbacks mentioned above with reference to the known art.

Such a problem is solved by the reflecting panel according to claim 1, by the method for the manufacturing thereof according to claim 8 and by the reflecting element according to claim 13.

The present invention provides several relevant advantages. The main advantage lies in that the method according to the present invention allows to manufacture big sized reflecting panels having high reflectivity, even if it does not require particularly expensive materials and manufacturing techniques. At the same time, the panel according to the present invention could be quite easily shaped according particular deflections, in particular according to a parabolic shape, and having optimal surface and breaking strength features, making it easily transportable and mountable. Furthermore, the method according to the present invention can be used for industrial production and has low manufacturing costs, thus making it particularly suitable for use in concentrating solar power plants, into which it is appropriate to use the greatest reflecting surface but at the same time having manufacturing costs which are not excessive.

In addition, the reflecting panel according to the present invention requires minimal maintenance since it is particularly resistant to the atmospheric agents to which is subjected during operation.

Finally, the reflecting panel according to the present invention is not subjected to problems connected to thermal expansion when fixed on supporting structures, e.g. for the use thereof in solar power plants.

Other advantages, features and the operation modes of the present invention will be made apparent from the following detailed description of some embodiments thereof, given by way of a non-limiting example. Reference will be made to the figures of the annexed drawings, wherein:
- figure 1 is a cross sectional schematic view, showing the panel according to the present invention;
- figure 2 is a perspective view of the reflecting panel according to the present invention and of a respective support.

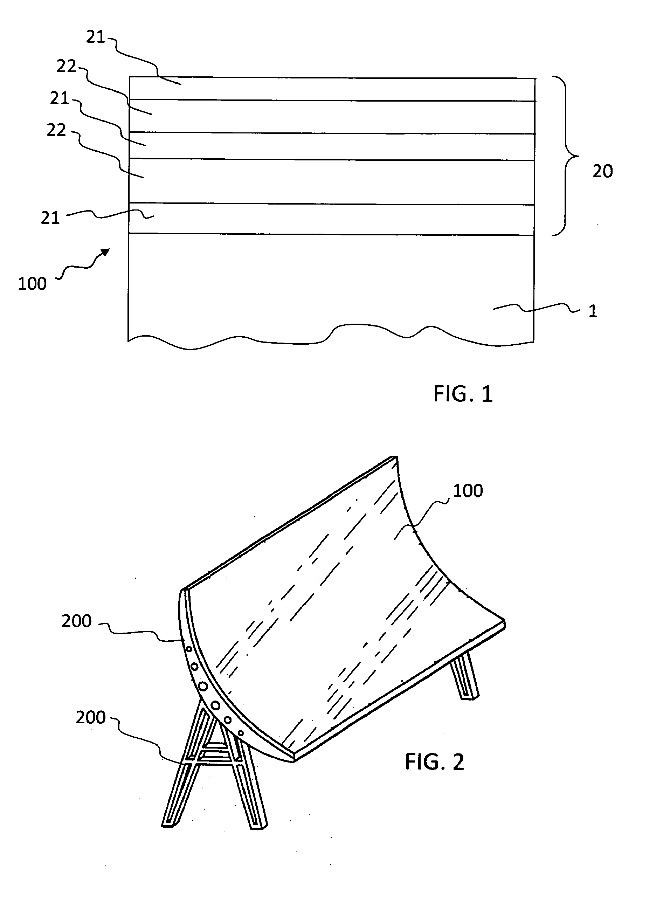

With reference initially to figure 1, it is shown a reflecting panel 100 according to the present invention by means of a cross sectional schematic view.

The panel 100 is formed by a substrate 1 in a composite polymeric material, preferably, chosen among polycarbonate, polymetilmetacrilate and plastic reinforced by fibre glass. Examples of materials that can be used in the method according to the present invention are represented by SMC (Sheet Moulding Compound) or BMC (Bulk Moulding Compound). In any case, also the use of different thermoplastic or thermosetting could be envisaged. Then, the composite polymeric material substrate can be worked so as to obtain a reflecting surface sized so as to be suitable, e.g., for use as reflecting parabolic panels for concentrating solar power plants, for example in panels with 1-2 meters sized sides.

The above mentioned polymeric materials will thus allow to provide a substrate which is thin enough, but at the same time resistant, so as to have a good flexibility.

Furthermore, the above mentioned polymeric materials can be easily worked according to a quite precise curved shape, in particular parabolic, contrarily to panels manufactured according to the know art, the manufacturing thereof being normally affected by shape errors lowering the performances thereof, even if slightly.

Hence, in particular, the thickness of such substrate 1 will be such that it allows enough flexibility for not compromising the handling during transport and mounting of the panel and, at the same time, it will be shaped according to the parabolic shape required by the application when fixed on the supporting structure 200. This feature is therefore particularly advantageous and it is made possible by the use of the composite polymeric substrate having these features and, at the same time it will be able to be worked according to the method hereby described.

It is evident that a person skilled in the art will be able to suitably dimension the substrate 1 so as it is flexible enough to be placed with the desired deflection on the support 200.

The use of SMC or BMC composites is particularly advantageous since it allows to provide substrates 1 merely by moulding, thus easily providing the substrates with the desired curved shape. In addition, such methods allow to provide substrates 1 having already polished surfaces after moulding and hence they are particularly suitable for realizing reflecting surfaces, according to the method that will be described in the following.

Always with reference to figure 1, the reflecting panel according to the present invention further comprises a dielectric reflective coating 20.

In general, working principle of a dielectric reflective coating is based on the use of a set of alternated layers, made of two different materials and having different thickness between them. Normally such coating is provided on small sized glasses in optometry, for manufacturing mirror lenses, or on different substrates for various applications in electronic field, which requires apposite reflectivity features to the material.

As shown in figure 1, the dielectric coating 20 alternates layers made of a high refractive index material 21 and layers made of a low refractive index material 22.

Layers 21 and 22 will be alternated and they could different thickness both between them and at each repetition of the set formed by the two layers 21 and 22. By way of example, in case four layers are used, the layers having thicknesses approximately equal to a wavelength quarter for an incident light beam normal to the panel surface 100, the overall thickness of the dielectric reflective coating 20 will be about 500 nm. Obviously, for more layers, the overall thicknesses will be higher, up to about 800 nm, with thicknesses of the single layers eventually lower than a wavelength quarter. In the present exemplificative embodiment, there are five layers, and both lower refractive index layers 22, and higher refractive index layers 21 have thicknesses variable between them. In addition, as can be seen from figure 1, higher refractive index layers 21 have a lower thickness than lower refractive index layers 22.

Therefore, this layers repetition allows to obtain a very high reflectivity within a range of wavelengths that can be defined by the choosing thicknesses. Accordingly, and contrarily to panels manufactured according to the know art, it will be possible to completely exploit sunlight, for its whole range of wavelengths, with maximal reflectivity values that can reach 100% in theory and, experimentally, are about 99 %.

In any case, it should be understood that in order to provide the coating 20 with reflecting properties only two layers are required in theory, one with high refractive index 21 and one with low refractive index 22. Nevertheless, the more numerous the layers are, the largest the wavelengths range reflected by the coating 20 will be, obviously with a consequent increase in manufacturing times and costs. Experimentally, it has been found that a good compromise between the width of the reflected spectrum, thus reasonable reflectivity capability, and cost effectiveness and functional capacity, is offered by using a total number of layers comprised between four and eleven.

Therefore, in general, in order to obtain high reflectivity values, it is appropriate that dielectric material layers 21 and 22 have very precisely and controlled sized thicknesses.

In order to obtain these features, the dielectric layers 21 and 22 are formed by an ALD (Atomic Layer Deposition) technique.

ALD is a technique allowing to deposit ultra-thin layers (nano-layers) having controlled thickness. In this technique a substrate, in this case the composite polymeric material substrate 1, is placed in a suitable processing chamber, into which a first precursor gas containing the material to be deposited on the substrate is inlet. After such gas is inlet within the processing chamber, a first precursor gas molecular layer will be adsorbed on the substrate 10. Subsequent the adsorption, an inert gas is inlet in the processing chamber, in order to remove the first precursor gas from the chamber and made the adsorbed layer perfectly uniform, i.e. to guarantee that the first precursor gas is adsorbed on a single mono-layer.

Hence, such adsorbed layer is capable of reacting with a second precursor gas that is inputted in the processing chamber after the inert gas is ejected from the chamber.

More precisely, the second precursor gas will react with the first adsorbed layer, forming a layer of the desired material and some reaction products will be again outputted from the processing chamber by inletting inert gas. The choices in gas and materials used will be described in detail in the following.

This operating cycle allows to provide a single molecular layer by means of ALD and, accordingly, the cycle should be repeated for a as much times as required until the desired overall thickness of the first higher refractive index material layer 21 is reached. Indicatively, about 200 cycles could be required for forming a wavelength quarter layer, nevertheless it is also obvious that this feature will depend on the sizes of the molecule involved. Once the first higher refractive index material layer 21 is formed, second lower refractive index material layer 22 is formed above the first layer 21 by means of a similar procedure. Obviously, for this material different precursor gases will be used, in particular with reference to the first precursor gas adsorbed by the substrate 1, now above the first layer 21. It should be noted that even during optimization it will be possible to decide whether the first layer deposited on the substrate should have high refractive index or, vice-versa, a low refractive index.

One of the advantages of ALD technique consists in that the reaction is completed as a single uniform layer is deposited on the substrate and this feature allow to control very precisely the thickness of the layers deposited by ALD, as such thickness will exclusively vary according to the gas and substrate kind, and to the number of cycles repeated and therefore not according to reaction time and conditions, in particular pressure and temperature. This feature makes the choice of ALD particularly advantageous, allowing to obtain optimal reflectivity properties thanks to the precise control of the dielectric layers thicknesses.

With reference to materials and gases used, according to the present embodiment, the layer having the lower refractive index 22 can be made of aluminium oxide or silicon oxide and the higher refractive index one 21 in titanium, zirconium, niobium, tantalium, zinc oxides.

The choice of the material couples depends on various factors but, by way of example, it will be shown in further detail the case in which aluminium oxide and titanium oxide are respectively used.

In particular, in order to form the aluminium oxide layer, trimethylaluminium (Al(CH₃)₃) can be used as first precursor gas.

Hence, water vapour could be advantageously used as second precursor gas, so as to obtain the following reaction:

2Al(CH₃)₃ + 3H₂O → Al₂O₃ + 6CH₄

wherein an aluminium oxide mono-layer will be deposited on the substrate 1 and methane will be released as reaction by-product.

Instead, titanium chloride can be used as first precursor gas and again water vapour as second precursor gas in order to form the titanium oxide layer.

It is evident that also other dielectric materials couples can be used having different refraction indexes between them, e.g., as previously outlined, zinc sulphate or zirconium dioxide can be used as high index materials, whilst magnesium fluoride or silicon oxide can be used as low index materials.

A specific precursor should be anyhow used for such materials capable of realizing the deposit on the composite polymeric material substrate 1.

Compared to the know manufacturing methods, the use of ALD technique allows to avoid the use of high vacuum chambers and to use a single deposition chamber to perform the deposit of each dielectric material layer 21, 22, since it will be sufficient to provide a washing step by introducing an inert gas in the deposition chamber. Furthermore, also the processing temperature is particularly low, approximately about 60 °C, and this feature allows to use thermoplastic or thermosetting composite substrates, unlike known methods.

The use of a dielectric reflective coating is also particularly advantageous with respect to metal coatings, not only for the enhanced reflectivity properties, but also as it is suitable for being deposited by means of the above described technique, while, precursor gases for ALD deposit of metals such as silver are not known.

In addition, the dielectric reflective coating 20 is not subjected to oxidation phenomena due to atmospheric factors, unlike silver layers or mirroring metal materials. This feature is thus particularly advantageous since it will not be necessary the use of a further protective layer.

Furthermore, another advantage provided by the present invention consists in that oxide layers used for forming the reflective dielectric coating also provides the panels with particular protective features, e.g., it advantageously became water-repellent and self-cleaning due to the presence of the titanium oxide layer. In fact it should be noted that these features are particularly useful and advantageous in the manufacturing of reflecting panels for external use and accordingly subjected to atmospheric agents.

Always according to the use of ALD technique it will be also possible to perform a simultaneous coating of a plurality of substrates 1, being simply required to put them all together in the chamber, even slightly separated the one from the other, so as to let the gas diffuse uniformly. In this way, even if ALD technique requires significant amount of time for forming the layers, it will be anyhow possible to obtain a good industrial production by placing a great number of substrates inside the same chamber. Said chamber will not need to be excessively oversized than the overall dimensions of the panels, since it is sufficient to provide a small gap between the substrates so that the gas diffusion takes place, as previously described.

As previously pointed out, the panel 100 accordingly realized could be then fixed to a suitable supporting structure 200, as schematically shown in figure 2, and, by way of example, used in a concentrating solar power plant. Advantageously, the supporting structure 200 could be made of the same polymeric material of the substrate 1 and, in this way no problems connected to thermal expansion of the material will occur.

By means of mounting the panel on the supporting structure 200 it will be also possible to provide the panel 100 with the parabolic shape required for the use thereof. Nevertheless, it should be keep in mind that ALD dielectric reflective coating 20 will not be able to bear excessive strains, since this could affect the deposited dielectric layers integrity, that as previously shown are advantageously perfectly uniform and without any microporosity.

Advantageously, the reflecting panel 100 could be mounted on the supporting structure 200 by a vacuum system, as described in the Italian patent application PD 2007 A 000239, from the same applicant. Alternatively, or in addition, the reflecting panel could be advantageously realized with magnetic features, e.g. providing some magnetic powder within the substrate 1, so as to improve the adhesion of the panel 100 to the supporting structure 200, if it is made of metals.

Advantageously, these solutions allows to mount the panels 100 on the supporting structures 200 on the place of their final use and, accordingly to make the transport and installation operations remarkably easier.

In any case, alternatively again, other kind of fixing could be used, such as glues or mechanical means.

The present invention has hereto been described with reference to preferred embodiments thereof. It is understood that there could be other embodiments referable to the same inventive kernel, all falling within the protective scope of the claims set forth hereinafter.

## Claims

1. A reflecting panel (100) comprising a composite polymeric material substrate (1) and a dielectric reflective coating (20) deposited by means of an ALD (Atomic Layer Deposition) technique at least on a development surface of said substrate (1).

2. The reflecting panel (100) according to claim 1, wherein said material is a SMC (Sheet Moulding Compound) or BMC (Bulk Moulding Compound) composite material.

3. The reflecting panel (100) according to any of the preceding claims, wherein said dielectric reflective coating (20) is formed by one or more lower refractive index layers (22) alternated to one or more higher refractive index layers (21).

4. The reflecting panel (100) according to claim 3, wherein said one or more lower refractive index layers (22) has a different thickness to the thickness of said ore more higher refractive index layers (21).

5. The reflecting panel (100) according to claim 3 or 4, wherein said lower refractive index layers (22) and/or said higher refractive index layers (21) has variable thicknesses between them.

6. The reflecting panel (100) according to claim 4 or to claim 5 when dependent on claim 4, wherein said higher refractive index layers (21) has a lower thickness than said lower refractive index layers (22).

7. The reflecting panel (100) according to any of claims 3 to 6, wherein said one or more lower refractive index layers (22) are made of aluminium oxide or silicon oxide and said one or more higher refractive index layers (21) is made of titanium oxide.

8. A method for the manufacturing of a reflecting panel (100) comprising the steps of:
a. providing a composite polymeric material substrate (1);
b. depositing on said composite polymeric material substrate (1) a dielectric reflective coating (20) by an ALD (Atomic Layer Deposition) technique.

9. The method for the manufacturing of a reflecting panel (100) according to claim 8, wherein said step of depositing a dielectric reflective coating (20) is performed by depositing one or more higher refractive index layers (21) alternated to one or more lower refractive index layers (22).

10. The method for the manufacturing of a reflecting panel (100) according to claim 9, wherein said step of depositing a dielectric reflective coating (20) is performed by using respective couples of precursor gases apt to deposit said one or more lower refractive index layers (22) and said one or more higher refractive index layers (21), respectively.

11. The method for the manufacturing of a reflecting panel (100) according to claim 10, wherein the couple of precursor gases for forming the lower refractive index layer (22) is represented by trimethylaluminium and water and the couple of precursor gases per forming the higher refractive index layer (21) is represented by titanium cloride and water.

12. The method for the manufacturing of a reflecting panel (100) according to any of claims 9 to 11, wherein said step of depositing said one or more lower refractive index layers (22) and/or said one or more higher refractive index layers (21) is performed by depositing a plurality of overlapped molecular mono-layers of said one or more lower refractive index layers (22) and/or said one or more higher refractive index layers (21).

13. A reflecting element for concentrating solar power plants, comprising a reflecting panel (100) according to any of claims 2 to 9, and a supporting structure (200) onto which said reflecting panel is mounted so as to provide said reflecting panel (1) with a substantially curved shape.

14. The reflecting element according to claim 13, wherein said supporting structure (2) is made of the same material of said substrate of the reflecting panel (100).

15. The reflecting element according to claim 13 or 14, wherein the polymeric material of said reflecting panel (100) has magnetic properties, said reflecting panel (100) being connected to said support (200) by magnetic attraction.
